Europäisches Patentamt

European Patent Office

Office européen des brevets

(19)

(11) Veröffentlichungsnummer: **0 364 662 B1**

# EUROPÄISCHE PATENTSCHRIFT

(12)

(45) Veröffentlichungstag der Patentschrift :
27.12.91 Patentblatt 91/52

(51) Int. Cl.⁵ : **F16F 13/00**

(21) Anmeldenummer : **89110261.8**

(22) Anmeldetag : **07.06.89**

---

(54) **Gummilager.**

---

(30) Priorität : **18.10.88 DE 3835384**

(43) Veröffentlichungstag der Anmeldung :
**25.04.90 Patentblatt 90/17**

(45) Bekanntmachung des Hinweises auf die
Patenterteilung :
**27.12.91 Patentblatt 91/52**

(84) Benannte Vertragsstaaten :
**DE ES FR GB IT SE**

(56) Entgegenhaltungen :
**EP-A- 0 150 824**
**DE-U- 8 701 876**
**FR-A- 2 508 582**

(73) Patentinhaber : **Firma Carl Freudenberg**
**Höhnerweg 2-4**
**W-6940 Weinheim/Bergstrasse (DE)**

(72) Erfinder : **Freudenberg, Ulrich, Dr.**
**Büttemer Weg 26**
**W-6945 Hirschberg (DE)**
Erfinder : **Freudenberg, Tillman, Dr.**
**Hügelstrasse 49**
**W-6940 Weinheim (DE)**

---

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Gummilager mit einem flüssigkeitsgefüllten Arbeitsraum, bei dem erste Mittel zur Dämpfung tieffrequenter Schwingungen unterhalb von 20 Hz vorgesehen sind sowie zweite Mittel zur Dämpfung hochfrequenter Schwingungen oberhalb von 20 Hz, wobei die ersten Mittel durch eine den Arbeitsraum begrenzende, elastisch verformbare Tragfeder mit einer Nachgiebigkeit der Tragfeder und eine Dämpfungsöffnung gebildet sind, durch die bei Einleitung tieffrequenter Schwingungen Flüssigkeit unter Vernichtung von Energie verlagerbar ist, wobei die zweiten Mittel durch eine den Arbeitsraum mit einem Pufferraum verbindende Leitung von trichterförmig in Richtung des Arbeitsraumes erweitertem Querschnitt gebildet sind, die gegenüber dem Pufferraum durch einen Dämpfungskörper mit dem Strömungswiderstand R abgeschlossen ist und die an der engsten Stelle den Wellenwiderstand

$Zw = \sqrt{L'/C'}$ aufweist, wobei

$L' = \rho/A$ = Trägheitsbelag

$C' = (2A/E) \cdot ((1 + X^2)/(1 - X^2))$ = Nachgiebigkeitsbelag

$\rho$ = Dichte der Flüssigkeit

$A$ = Leitungsquerschnitt

$E$ = Elastizitätsmodul der Leitung und wobei

$X$ = Radienverhältnis der Wandung und wobei die Leitung von im wesentlichen unveränderbarer Länge ist.

Ein solches Gummilager ist aus dem deutschen Gebrauchsmuster 7616276 bekannt. Die der Dämpfung tieffrequenter Schwingungen dienenden, ersten Mittel umfassen dabei eine kanalartig ausgebildete Dämpfungsöffnung, in der das enthaltene Flüssigkeitsvolumen bei Einleitung tieffrequenter Schwingungen in eine Resonanzbewegung gelangt, was eine gute Dämpfung dieser Schwingungen bewirkt. Bei Einleitung hochfrequenter Schwingungen kommt die Resonanzbewegung der enthaltenen Flüssigkeitsbestandteile zum Erliegen und es werden die zweiten Mittel wirksam. Diese bestehen aus einer elastisch abgestützten Membran, welche dazu bestimmt ist, die durch die Einleitung der hochfrequenten Schwingungen verursachten Druckänderungen in dem Arbeitsraum zu isolieren. Durch die elastische Abstützung der Membran gelingt das indessen nur sehr unvollkommen und es verbleiben in jedem Falle Restkräfte, die über das Gummilager übertragen werden. Das tritt besonders deutlich in Erscheinung, wenn gleichzeitig mit der Einleitung hochfrequenter Schwingungen tieffrequente Schwingungen eingeleitet werden. Die Membran gelangt in diesen Fällen zeitweilig an ihr zugeordneten, unnachgiebigen Anschlägen des Gummilagers zur Anlage. Sie ist dann völlig unwirksam, das heißt, die hochfrequenten Schwingungen werden ungemildert übertragen.

Ein weiteres Gummilager ist aus der EP-A-0150824 bekannt. Danach ist ein Zweikammer-Motorlager bekannt, dessen flüssigkeitsgefüllte und gummielastische Umfangswände aufweisende Kammern über einen in einer Zwischenplatte vorgesehenen, annähernd wendelförmig verlaufenden Kanal miteinander in Verbindung stehen. Zur breitbandigen Dämpfung auftretender Schwingungen weist die Zwischenplatte zusätzlich eine diese senkrecht durchsetzende Düse auf, die dem wendelförmigen Kanal hydraulisch parallelgeschaltet ist. Dabei ist allerdings zu beachten, daß die Düse, die die Zwischenplatte senkrecht durchragt, nur eine vergleichsweise geringe Länge aufweist und im Durchtrittsbereich im wesentlichen zylindrisch gestaltet ist. Lediglich der Flüssigkeitseintritt sowie der Flüssigkeitsaustritt sind konisch erweitert und lassen sich mit Einsenkungen einer Bohrung vergleichen. Durch diese Ausgestaltung und dadurch, daß die Zwischenplatte und somit die Wandungen der Düse aus unnachgiebigem Werkstoff bestehen, ergeben sich unbefriedigende Gebrauchseigenschaften des Lagers insbesondere bezüglich der Isolierung höherfrequenter Schwingungen.

Der Erfindung liegt die Aufgabe zugrunde, ein Gummilager der eingangs genannten Art derart weiterzuentwickeln, daß sich bei Einleitung tieffrequenter Schwingungen eine zumindest gleichwertige Dämpfung dieser Schwingungen ergibt und daß bei Einleitung hochfrequenter Schwingungen die übertragenen Kräfte vergleichsweise reduziert sind, insbesondere auch in Fällen, in denen die hochfrequenten Schwingungen gleichzeitig mit tieffrequenten Schwingungen eingeleitet werden.

Diese Aufgabe wird erfindungsgemäß bei einem Gummilager der eingangs genannten Art dadurch gelöst, daß die Leitung eine Länge L aufweist, die wenigstens 0,2 mal so groß ist wie die größte Wellenlänge λ der sich bei Einleitung hochfrequenter Schwingungen in der Leitung ergebenen Druckschwankungen, daß die Leitung innerhalb der Länge L an wenigstens einer Umfangsstelle elastisch verformbar ist und eine Nachgiebigkeit der Leitung aufweist, daß die Nachgiebigkeit der Leitung die Nachgiebigkeit der Tragfeder derart ergänzt, daß sich in der Dämpfungsöffnung bei Einleitung tieffrequenter Schwingungen die gewünschte Energievernichtung ergibt, daß der Strömungswiderstand R und der Wellenwiderstand Zw im wesentlichen übereinstimmen und daß die Leitung einen dem Arbeitsraum zugewandten Eintrittsquerschnitt aufweist, der wenigstens 0,2 mal so groß ist wie der von der Tragfeder bei Einleitung von Schwingungen verdrängte Querschnitt.

Zur Erläuterung läßt sich folgendes angeben :

Die Leitung des erfindungsgemäßen Gummilagers ist in Umfangsrichtung an wenigstens einer Stelle der Wandung elastisch nachgiebig begrenzt und hat in diesem Bereich eine Nachgiebigkeit, die diejenige der den Arbeitsraum an anderen Stellen begrenzenden Tragfeder additiv ergänzt. Beide Nachgiebigkeiten gemeinsam bestimmen damit bei Einleitung tieffrequenter Schwingungen die Größe des Flüssigkeitsvolumens, das in der Dämpfungsöffnung zwischen dem Arbeitsraum und einem Ausgleichsraum hin- und herverlagert wird. Die Anpassung der Dämpfung an besondere Erfordernisse des Anwendungsfalles ist dadurch problemlos möglich und insbesondere unter sehr weicher Ausbildung der Tragfeder, was sich vorteilhaft auswirkt auf die Unterdrückung störender Kräfte.

Bei Einleitung höherfrequenter Schwingungen ergibt sich durch die Trägheitsmasse, welche die Flüssigkeit aufweist, eine zunehmende Verminderung dieses Effektes. Der Grad, in welchem die bei Einleitung tieffrequenter Schwingungen in der Dämpfungsöffnung zu beobachtende Relativverlagerung von Flüssigkeitsbestandteilen eintritt, erfährt dadurch bei Einleitung von höherfrequenten Schwingungen eine zunehmende Verminderung. Sie wird bei dem erfindungsgemäßen Gummilager wegen der Umfangsnachgiebigkeit der Leitung zunehmend ersetzt durch ein Wellenphänomen, welches in der Leitung auftritt.

Das Wellenphänomen wird ausgelöst durch die sich im Arbeitsraum ergebenden Druckänderungen, die sich in Form von Druckwellen durch die Leitung hindurch in Richtung des Pufferraumes ausbreiten. Das erfindungsgemäße Gummilager hat bei höherfrequenten Schwingungen in dem Frequenzbereich zwischen 20 und 100 Hz eine sehr weiche Federungscharakteristik, was später erläutert werden wird. Oberhalb von etwa 100 Hz steigt die dynamische Federrate an, jedoch nicht durch Trägheitseffekte, sondern durch eine Dissipation von Erregerleistung in einem Dämpfungskörper, der zwischen der Leitung und dem Pufferraum angeordnet ist. Die Wirksamkeit im hochfrequenten Bereich, und dieser ist in akustischer Hinsicht besonders interessant, ist deshalb auch dann noch gegeben, wenn gleichzeitig mit den hochfrequenten Schwingungen niederfrequente Schwingungen großer Amplitude in das Gummilager eingeleitet werden. Der Pufferraum und der Ausgleichsraum können dabei durch eine einzige oder auch durch getrennte Kammern gebildet sein, ohne daß sich hierdurch eine Änderung der Grundfunktion ergibt. Erreicht wird diese Wirksamkeit bei dem erfindungsgemäßen Gummilager durch die Erschließung von bisher nicht bekannten, wellenakustischen Effekten. Bedingt durch die sehr geringe Kompressibilität der in dem Gummilager enthaltenen Flüssigkeit, hierbei handelt es sich um eine übliche Hydraulikflüssigkeit wie beispielsweise Glykol und/oder Wasser, sind die sich darin ergebenen Wellenlängen akustischer Wellen an sich um sehr vieles gröber als die Längen üblicher Gummilager mit einem flüssigkeitsgefüllten Arbeitsraum. Bei der erfindungsgemäßen Ausführung wird der hierfür maßgeblichen Masseträgheit der Flüssigkeit mit Hilfe der blähnachgiebigen Ausbildung der Wandung der Leitung eine Nachgiebigkeit verliehen, durch welche die Wellenlängen in den Bereich einiger Zentimeter heruntertransformiert werden. Sie lassen sich dadurch in einem Dämpfungskörper reflexionsfrei absorbieren, ohne daß sich unzumutbar grobe Abmessungen der Leitung ergeben. Zur Erläuterung wird auf die Ausbreitung von Druck- oder Volumenstromwellen in einem Schlauch mit elastisch nachgiebiger Wandung verwiesen. Unter der Einwirkung eines Drucksignals kann diese Flüssigkeitsvolumina in den in Längsrichtung aufeinanderfolgenden Teilbereichen zwischenspeichern und wieder abgeben und es ist infolgedessen sinnvoll, dem Schlauch einen längebezogenen Nachgiebigkeitsbelag C' zuzuordnen. Dieser hängt größenmäßig ab dem E-Modul des den Schlauch bildenden Wandungsmaterials, vom Radienverhältnis X der Wandung und vom Leitungsquerschnitt A.

$$C' \approx \frac{2A}{E} \cdot \frac{1 + X^2}{1 - X^2}$$

Ebenso kann man einen Trägheitsbelag L' definieren, der von der Dichte der Flüssigkeit und vom Leitungsquerschnitt abhängt :

$$L' = \frac{\varsigma}{A}$$

Die Ausbreitungsgeschwindigkeit der Wellen ist gegeben durch

$$v = \frac{1}{\sqrt{L' \cdot C'}}$$

mit Hilfe von v und der Frequenz f erhält man die Wellenlänge :

$$\lambda = \frac{v}{f}$$

Eine weitere Kenngröße der Leitung ist der Wellenwiderstand Zw, definiert als Quotient aus Druckamplitude und Volumenstromamplitude. Für Zw ergibt sich :

$$Zw = \sqrt{\frac{L'}{C'}}$$

In der Leitung des erfindungsgemäßen Gummilagers werden die Wellen dadurch reflexionsfrei absorbiert, daß diese an dem von dem Arbeitsraum abgewandten Ende durch einen Dämpfungskörper abgeschlossen ist, der einen mit dem Wellenwiderstand Zw übereinstimmenden Strömungswiderstand R aufweist. In technicher Hinsicht kann der Dämpfungskörper als rein viskoser Strömungswiderstand ausgebildet sein.

Man erhält insgesamt einen Absorber, der die pulsierende Druckänderung, die sich bei Einleitung hochfrequenter Schwingungen von mehr als 20 Hz in dem Arbeitsraum des Gummilagers ergibt, in eine Wellenschwingung in der Leitung überführen kann. Die in den Wellen transportierte Energie wird in dem Dämpfungskörper verbraucht.

Der beschriebene Mechanismus setzt ein, wenn die Länge der Leitung λ/4 überschreitet. Da die Ausbreitungsgeschwindigkeit v nicht von der Frequenz abhängt, ist dies eine Frequenzbedingung.

Bei dem erfindungsgemäßen Gummilager ist die Leitung trichterförmig in Richtung des Dämpfungskörpers in ihrem Querschnitt stetig verjüngt und hinsichtlich der Dicke ihrer nachgiebigen Wandung stetig vermindert, um zu erreichen, daß die Länge und die Ausbreitungsgeschwindigkeit der Druckwellen über die gesamte Länge der Leitung konstant sind. Es versteht sich von selbst, daß sich ein abweichendes Funktionsprinzip auch dann nicht ergibt, wenn mehrere derartige Leitungen parallelgeschaltet sind.

Bei niedrigen Frequenzen unter 10 Hz ist eine solche Leitung wellenakustisch noch nicht wirksam. Wegen des hohen Strömungswiderstandes des Dämpfungskörpers wird die Flüssigkeit in diesem Falle vielmehr durch die Dämpfungsöffnung hindurchgepreßt, so daß eine Wechselwirkung zwischen der Flüssigkeitsträgheit in der Dämpfungsöffnung und der Blähnachgiebigkeit der Leitungswandung und der Tragfeder entsteht. Die Leitungswandung liefert hierin einen erheblichen Beitrag zu dem für eine gute Dämpfung tieffrequenter Schwingungen günstigen Verhärtungsmechanismus des Gummilagers. Auf den Beitrag der Tragfeder zur Volumennachgiebigkeit des Arbeitsraumes, welche für die Eliminierung hochfrequenter Schwingungen erforderlich ist, ist man nicht mehr angewiesen und es ergibt sich um so mehr konstruktive Freiheit, die Tragfeder im Hinblick auf die Aufnahme der zu tragenden Lasten optimal zu gestalten.

Im Bereich akustischer Frequenzen ist ein möglichst niedriger Wellenwiderstand am Eingang der Leitung günstig. Dieser Forderung kommt die trichterförmige Ausbildung entgegen, da der Wellenwiderstand in diesem Falle am Eingang am niedrigsten ist und dann mit zunehmender Länge anwächst.

Die Leitung soll einen dem Arbeitsraum zugewandten Eintrittsquerschnitt aufweisen, der wenigstens 0,2 mal so groß ist wie der von der Tragfeder bei Einleitung von Schwingungen verdrängte Querschnitt. Ist das Verhältnis noch geringer, dann sinkt die Dämpfungswirkung in bezug auf die Eliminierung hochfrequenter Schwingungen unter eine Größenordnung ab, die technisch sinnvoll ist. Größere Verhältnisse werden daher bevorzugt und insbesondere ein Verhältnis von wenigstens 0,6. Der Eintrittsquerschnitt der Leitung kann auch annähernd ebenso groß sein wie der von der Tragfeder bei Einleitung von Schwingungen verdrängte Querschnitt. In diesem Falle ergibt sich jedoch eine relativ große Baulänge der Leitung, welche in funktioneller Hinsicht als Wellenleiter ausgebildet ist.

Der die Leitung abschließende Pufferraum kann von einer flexiblen Wandung begrenzt und hierdurch zur drucklosen Aufnahme zusätzlichen Flüssigkeitsvolumens geeignet sein. Hierdurch vermag sich in dem Pufferraum keinerlei Gegendruck aufzubauen und es gelingt, das maximal verfügbare Druckgefälle im Hinblick auf die Erzielung einer guten Dämpfungswirkung auszunutzen.

Der zwischen der Leitung und dem Pufferraum angeordnete Dämpfungskörper kann aus unverrückbar zusammengelagerten Festkörpern bestehen, um eine feste Ankopplung an die Leitung zu gewährleisten. Diese ist wichtig im Hinblick auf die Gewährleistung eines reflexionsfreien Abschlußes der Leitung. Die Verwendung eines einstückigen, porösen Körpers ist ebenfalls möglich.

Falls mehrere Festkörper verwendet werden, sollten diese verklebt und/oder durch ein flüssigkeitsdurchlässiges Gehäuse mechanisch verklammert sein. Im erstgenannten Falle besteht die Möglichkeit, die gegenseitige Verbindung durch Verwendung eines Klebstoffes herzustellen oder auch durch ein Klebrigmachen der Oberfläche der Festkörper und deren anschließende Verpressung. Entsprechend hergestellte Dämpfungskörper lassen sich besonders kostengünstig erzeugen.

Es ist auch möglich, die Festkörper in loser Schüttung in ein flüssigkeitsdurchlässiges Gehäuse einzulagern, beispielsweise in einen starren Siebkäfig und in demselben unverrückbar aneinander anzupressen. In diesem Falle muß zwar ein vergleichsweise höherer Herstellungspreis in Kauf genommen werden, die Porenradienverteilung zeichnet sich aber durch eine besonders feine und gleichmäßige Struktur aus, die in ausgezeichneter Weise reproduzierbar ist. Insbesondere für eine Grobserienfertigung, in welcher es auf optimale Gleichmäßigkeit der erhaltenden Produkte ankommt, hat sich die Verwendung entsprechender Dämpfungskörper daher bewährt.

Hinsichtlich der Ausbildung der Wandung in Umfangsrichtung genügt es in einfachstem Falle, wenn diese nur an einer Stelle in radialer Richtung aufblähbar ist. Die technische Realisierbarkeit ist dabei um so einfacher, je ausgedehnter diese Stelle ist. Es wird daher im Rahmen der vorliegenden Erfindung eine Ausführung unter technischen Gesichtspunkten bevorzugt, bei der die Leitung in Umfangsrichtung vollständig von einer aufblähbaren Wandung umschlossen ist.

Eine solche Leitung kann innen- und außenseitig durch trichterförmig gestaltete Flächen begrenzt sein, d.h. durch gleichgerichtete, konzentrisch ineinanderliegende Kegelstumpfflächen. Die Herstellung ist in diesem Falle besonders einfach. Will man hingegen eine optimale Wirksamkeit haben, welche nur erreichbar ist unter Gewährleistung einer gleichbleibenden Wellenausbreitungsgeschwindigkeit durch die gesamte Länge der Leitung, dann ist es notwendig, den trichterförmig gestalteten Flächen die Gestalt von Exponentialtrichtern zu geben. Die letztlich erzielte Wirksamkeit läßt sich in diesem Falle auch rechnerisch exakt vorherbestimmen.

Die Leitung kann zumindest auf einem Teil ihrer Länge von ovalem Querschnitt sein. Sie verhält sich bei einer solchen Ausbildung in bezug auf Druckschwingungen der enthaltenen Flüssigkeit kleiner Amplitude weicher als in bezug auf Druckschwingungen großer Amplitude. Sowohl in bezug auf die Dämpfung niederfrequenter Schwingungen als auch in bezug auf die Dämpfung hochfrequenter Schwingungen ist das von Vorteil.

Die Leitung kann auch eine Wandung aufweisen, die im Bereich der nachgiebigen Umfangsstellen membranartig gestaltet ist und eine in Richtung des Arbeitsraumes stetig vergrößerte Dicke hat. Die membranartige Umfangsstelle kann bei einer solchen Ausführung auch in sich selbst eben gestaltet sein, was erlaubt, der Leitung insgesamt eine sehr kompakte Gestalt zu geben und sie an den übrigen Umfangsstellen durch metallische Wandungen zu umschließen. Hierdurch ist zugleich gewährleistet, daß die nachgiebige Umfangsstelle während der bestimmungsgemäßen Verwendung des Gummilagers keine unerwünschte Dehnung in Längsrichtung erfährt.

Die Leitung kann auch eine aufblähbare Wandung aufweisen, die in Längsrichtung zumindest an einer Stelle durch ein sich quer zur Längsrichtung zur Leitung erstreckendes Armierungselement abgestützt ist. Dieses kann in die blähbare Wandung eingebettet sein, jedoch gegebenenfalls auch aus einem Abstützelement bestehen, welches an der Außenseite der Wandung anliegt und gegebenenfalls einen Bestandteil der Wandung und/oder des metallischen Gehäuses des Gummilagers bildet.

Es ist an sich ohne Bedeutung, ob nur eine oder mehrere Leitungen der vorstehenden Art in einem Gummilager der erfindungsgemäßen Ausführung zur Anwendung gelangen. Wichtig ist jedoch, daß jede einzelne Leitung als Wellenleiter funktionsfähig ist und insofern eine gewisse Schlankheit hat. Die der Berechnung zugrunde zu legende Länge ergibt sich dabei jeweils aus demjenigen Teil der Länge der Leitung, der in Umfangsrichtung blähbar ist.

Der Gegenstand der Erfindung wird nachfolgend anhand der Figuren weiter erläutert. Es zeigen :

Figur 1                eine erste Ausführung eines Gummilagers in längsgeschnittener Darstellung ;
Figuren 2 und 2a        eine weitere Ausführung des Gummilagers in längs- und quergeschnittener Darstellung ;
Figuren 3 und 3a        eine weitere Ausführung des Gummilagers in längs- und quergeschnittener Darstellung ;
Figur 4                eine Leitung zur Verwendung in dem Gummilager, bei der die Leitung in Längsrichtung an mehreren, aufeinanderfolgenden Stellen abgestützt ist ;
Figuren 5 und 6        zwei Ausführungen von Leitungen in quergeschnittener Darstellung :

Figuren 7 und 8    zwei Ausführungen von Dämpfungskörpern in quergeschnittener Darstellung.

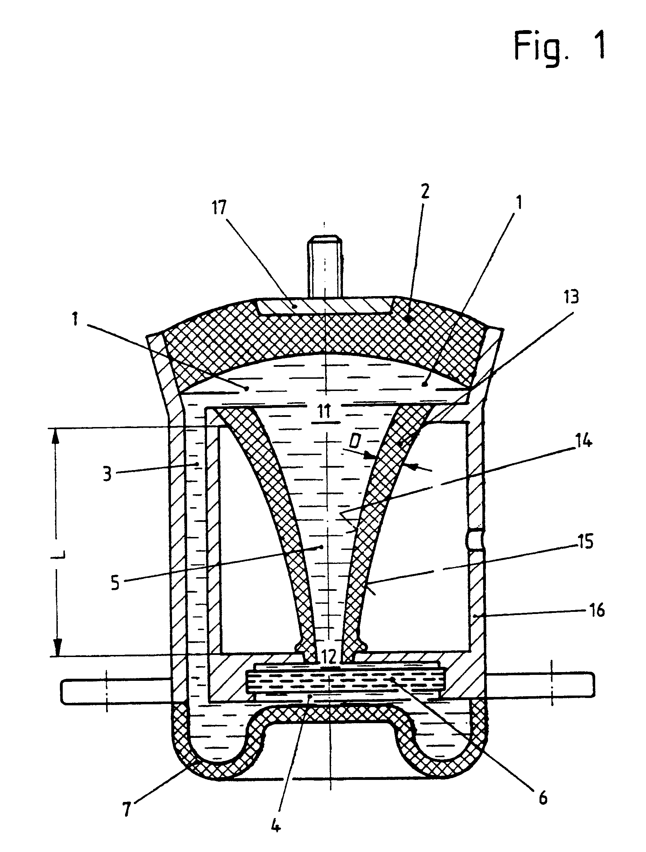

Das in Figur 1 gezeigte Gummilager umfaßt das Auflager 16 und das Traglager 17 aus metallischen Werkstoffen. Diese sind für die Festlegung des Gummilagers einerseits an dem Fundament und andererseits auf dem darauf abgestützten, schwingenden Körper bestimmt und durch die Tragfeder 2 aus gummielastischem Werkstoff verbunden. Diese umschließt gemeinsam mit dem Auflager 16 den Arbeitsraum 1, der mit einem Gemisch aus Glykol und Wasser gefüllt und durch die Dämpfungsöffnung 3 mit einem Ausgleichsraum verbunden ist. Die Dämpfungsöffnung 3 ist kanalartig gestaltet.

Im mittleren Bereich ist der Arbeitsraum 1 durch die Leitung 5 mit dem Pufferraum 4 verbunden, wobei in der Zwischenzone zwischen dem Pufferraum 4 und der Leitung 5 der Dämpfungskörper 6 angeordnet ist. Dieser besteht aus in Form einer Scheibe zusammengesinterten Partikeln aus PTFE, die in einer Aufnehmung des Auflagers 16 verankert ist. Die blähbare Leitung 5 ist schlauchförmig gestaltet und aus elastomerem Werkstoff erzeugt. Ihr Eintrittsquerschnitt 11 ist trichterförmig verengt in Richtung des Pufferraumes 4, wobei die engste Stelle 12 demselben unmittelbar vorgelagert ist. Die Wandung 13 der Leitung 5 hat dabei eine in Richtung des Pufferraumes 4 stetig verminderte Dicke, wobei die Wandung innen- und außenseitig durch trichterförmig gestaltete Flächen 14, 15 begrenzt ist, die die Gestalt von Exponentialtrichtern haben. Die Länge L der Leitung bezieht sich auf denjenigen Teil, der in radialer Richtung blähbar ist. Der Pufferraum 4, welcher zugleich den Ausgleichsraum bildet, in welchen die Dämpfungsöffnung 3 mündet, wird durch die flexible Wandung 7 nach außen begrenzt. Diese ist als Balg ausgebildet und zur drucklosen Aufnahme zusätzlichen Flüssigkeitsvolumens aus dem Arbeitsraum 1 geeignet, wodurch sich in diesem auch nach dem Aufbringen der betriebsbedingt abzutragenden, statischen Belastung kein veränderter Druck ergibt. Pulsierende Druckänderungen im Arbeitsraum 1 ergeben sich jedoch dann, wenn der auf dem Gummilager abgestützte Körper in eine schwingende Relativbewegung versetzt wird oder eine solche selbst bewirkt. Die Leitung 5 des Gummilagers ist in Umfangsrichtung elastisch nachgiebig ausgebildet und hat eine Nachgiebigkeit, die diejenige der den Arbeitsraum 1 begrenzten Tragfeder 2 additiv ergänzt. Beide Nachgiebigkeiten gemeinsam bestimmen dadurch bei Einleitung tieffrequenter Schwingungen von weniger als 10 Hz die Größe des Flüssigkeitsvolumens, das in der Dämpfungsöffnung 3 zwischen dem Arbeitsraum 1 und dem Ausgleichsraum 1 hin- und herverlagert wird. Dieses soll im Hinblick auf die Erzielung einer in dem genannten Fall erwünschten, guten Dämpfungswirkung möglichst groß sein. Die gezeigte Ausführung kommt dieser Forderung entgegen insofern, als die Dämpfungsöffnung 3 kanalartig gestaltet ist. Es besteht hierdurch die Möglichkeit, die Abstimmung mit der insgesamt vorhandenen Nachgiebigkeit so vorzunehmen, daß das enthaltene Flüssigkeitsvolumen in dem fraglichen Frequenzbereich in eine Resonanzbewegung gelangt. Diese ist nur an einer bestimmten Stelle des Frequenzbereiches von maximaler Wirkung. Das ist im allgemeinen ausreichend. In Anwendungsfällen, in denen demgegenüber eine den Gesamtbereich breitbandig abdeckende Dämpfungswirkung verlangt wird, besteht demgegenüber die Möglichkeit, die Dämpfungsöffnung blendenartig zu gestalten. Die mit einer solchen Ausführung erreichbaren Maximalwerte sind jedoch nicht ganz so groß wie bei der vorstehend beschriebenen Ausführung.

Bei Einleitung von Schwingungen einer ansteigenden Frequenz ergibt sich durch die Trägheitsmasse, welche die in dem Arbeitsraum 1 enthaltene Flüssigkeit aufweist, eine zunehmende Verminderung des vorstehend beschriebenen Effektes. Es wird somit zunehmend weniger Flüssigkeitsvolumen in der Dämpfungsöffnung 3 hin- und herverlagert. In gleichem Maße sinkt die in der Dämpfungsöffnung 3 erzielte Dämpfungswirkung. Sie wird wegen der Umfangsnachgiebigkeit der Leitung 5 zunehmend ersetzt durch ein Wellenphänomen, welches in derselben zu beobachten ist.

Dieses Wellenphänomen wird ausgelöst durch die sich im Arbeitsraum 1 ergebenden Druckänderungen, die sich in Form von Druckwellen durch die Leitung 5 hindurch in Richtung des Pufferraumes 4 ausbreiten. Zwischen der Leitung 5 und dem Pufferraum 4 ist indessen der Dämpfungskörper 6 angeordnet, in welchem die Druckwellen reflexionsfrei absorbiert werden. Eine Übertragung hochfrequenter Schwingungen von dem Traglager 17 auf das Auflager 16 ist dadurch ausgeschlossen, was vor allem in bezug auf akustisch wirksame Schwingungen, und das ist besonders wichtig, von hervorzuhebender Bedeutung ist.

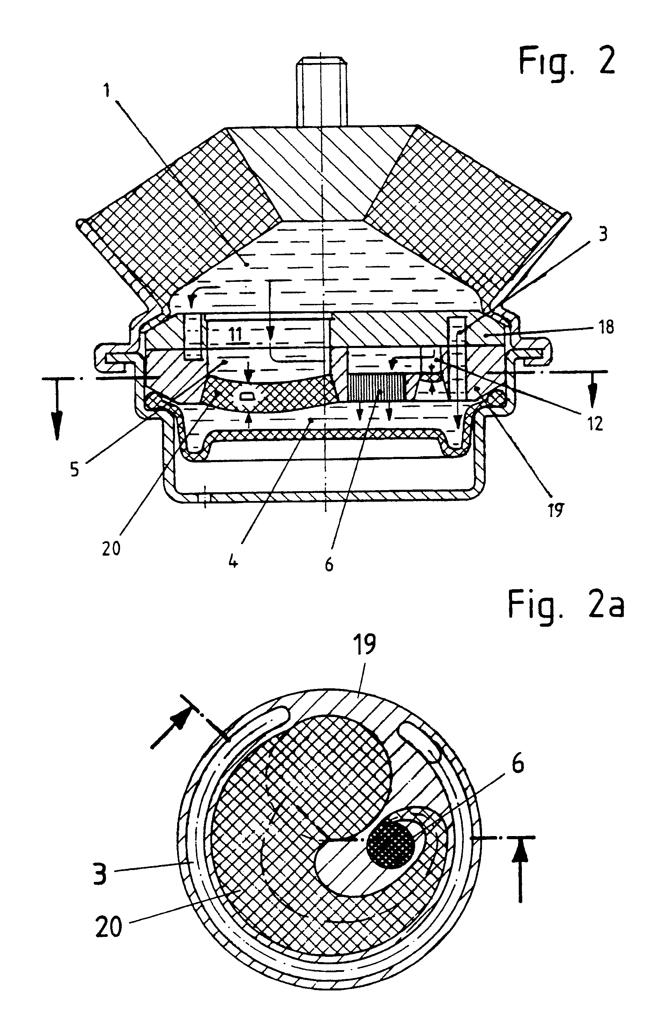

Die Figuren 2 und 2a zeigen eine Ausführung eines Gummilagers, die funktionell der vorstehend beschriebenen ähnlich ist. Sowohl die kanalartig ausgebildete Dämpfungsöffnung 3 als auch die Leitung 5 ist jedoch bei dieser Ausführung in einer aus metallischem Werkstoff bestehenden Trennwand angeordnet, welche die beiden Teile 18, 19 umfaßt. Beide Teile sind in axialer Richtung zusammengepreßt, wobei die enthaltenen Kavitäten einander ergänzen unter Bildung der Dämpfungsöffnung 3 und der Leitung 5. Die Ausführung ist dadurch kompakter gestaltet.

Die Dämpfungsöffnung 3 und die Leitung 5 haben beide einen im wesentlichen spiraligen Verlauf, wobei Mündungen einerseits in Richtung des Arbeitsraumes 1 und andererseits in Richtung des Pufferraumes 4 vorgesehen sind. Die Dämpfungsöffnung 3 ist dabei in Umfangsrichtung auf ihrer gesamten Länge unnachgiebig durch die beiden Teile 18, 19 der Trennwand umschlossen, die Leitung 5 hingegen nur in Richtung des Arbeitsraumes 1 und in Richtung der beiden Teile der Trennwand. Die die Leitung 5 in Richtung des Pufferraumes 4 begrenzende Wandung ist demgegenüber nachgiebig gestaltet und besteht aus einer elastisch aufblähbaren Membran 20, welche parallel zu dem in Richtung des Pufferraumes 4 verminderten Querschnitt der Leitung 5 eine entsprechend verminderte Dicke D aufweist. Der Eintrittsquerschnitt der Leitung 5 ist mit 11 bezeichnet, ihre engste Stelle ebenso wie beim vorstehend beschriebenen Beispiel mit der Bezugsziffer 12. Der zwischen der Austrittsöffnung der Leitung 5 und dem Pufferraum 4 angeordnete Dämpfungskörper 6 besteht aus einem spiralig aufgewickelten Stahlband, dessen Windungen einen geringen Abstand voneinander haben. Sein Strömungswiderstand R stimmt mit dem Wellenwiderstand Zw an der engsten Stelle 12 der Leitung 5 im wesentlichen überein. Druckwellen von akustischer Wirksamkeit können dadurch reflexionsfrei absorbiert werden.

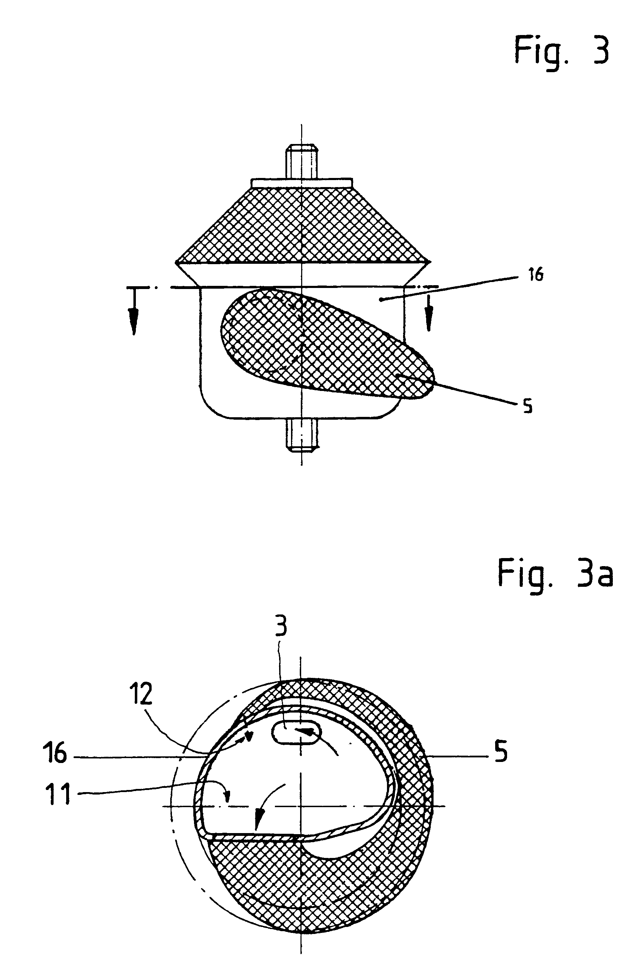

Die in Figur 3 in einer Ansicht von vorn und in Figur 3a in quergeschnittener Darstellung gezeigte Ausführung eines Gummilagers ist der vorstehend beschriebenen äußerlich und funktionell ähnlich. Die Leitung 5 ist bei dieser Ausführung indessen in Umfangsrichtung durch eine Wandung umschlossen, welche in ihrer Gesamtheit elastisch aufblähbar ist und welche das metallische Auflager 16 spiralig verlaufend auf der Außenseite umschließt. Die Länge der Leitung 5 ist dadurch relativ groß, was die Erzielung der erfindungswesentlichen Wellenleiterfunktion begünstigt. Die übrigen Einzelheiten können dem vorstehend beschriebenen Beispiel entsprechen.

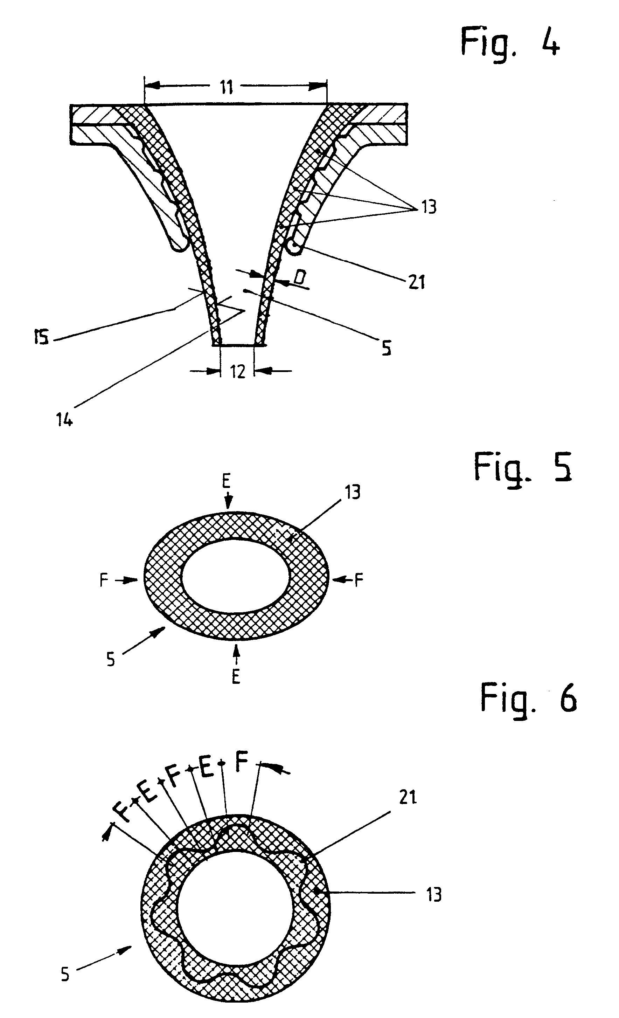

Figur 4 zeigt eine Ausführung einer Leitung 5 zur Verwendung in dem erfindungsgemäßen Gummilager, welche auf dem gesamten Umfang elastisch nachgiebig ausgebildet ist. Sie besteht aus elastomerem Werkstoff und ist innen- und außenseitig durch exponentialtrichterförmig gestaltete Flächen 14, 15 begrenzt, welche gleichgerichtet, konzentrisch zueinander angeordnet sind. Die Dicke D der Wandung ist, ausgehend von dem Eintrittsquerschnitt 11, in Richtung der engsten Stelle 12 der Leitung 5 stetig vermindert, was dazu führt, daß hochfrequente Druckänderungen in dem an den Eintrittsquerschnitt angrenzenden Arbeitsraum in der Leitung 5 in Druckwellen transformiert werden, welche sich linear in Richtung der engsten Stelle 12 der Leitung ausbreiten und damit in Richtung des dort angeordneten, nicht gezeigten Dämpfungskörpers, in welchem eine reflexionsfreie Absorption erfolgt. In der Zwischenzone zwischen dem Eintrittsquerschnitt 11 und der engsten Stelle 12 ist das Armierungselement 21 vorgesehen. Dieses ist trichterförmig gestaltet und berührt die Außenkontur der Leitung 5 mit konzentrisch umlaufenden Rippen, die einen axialen Abstand voneinander haben. Sie vermag dadurch in die Zwischenräume auszuweichen und die bei Einleitung hochfrequenter Schwingungen pulsierend aus dem Arbeitsraum verdrängten Flüssigkeitsvolumina leicht aufzunehmen. In bezug auf die bei Einleitung tieffrequenter Schwingungen von großer Amplitude aus dem Arbeitsraum verdrängten Flüssigkeitsvolumina verhält sich die Leitung 5 demgegenüber relativ steif und unnachgiebig, wodurch diese durch die nicht gezeigte Dämpfungsöffnung gepreßt werden und eine hochgradige Dämpfung solcher Schwingungen bewirken.

Anstelle des vorstehend beschriebenen, in sich geschlossen ausgebildeten und an dem Auflager befestigten Armierungselementes 21 läßt sich bei ähnlicher Wirksamkeit auch eine Ausführung verwenden, die zumindest einen nicht aufweitbaren Ring umfaßt, der direkt am Außenumfang der Wandung 13 der Leitung 5 befestigt oder in dieselbe eingebettet ist. Der Ring kann gegebenenfalls aus metallischem Werkstoff bestehen und durch einen Drehteil oder einen in sich geschlossenen Draht gebildet sein.

Ein funktionell ähnlicher Effekt läßt sich erzielen, wenn die Leitung 5 in der in den Figuren 5 und 6 im Querschnitt gezeigten Weise gestaltet ist. Es wird sich in diesen Fällen bei einer hochfrequenten Druckänderung in der während der normalen Verwendung im Inneren der Leitung befindlichen Flüssigkeit lediglich eine pulsierende Lageveränderung der Umfangsbestandteile E ergeben, während die Umfangsbestandteile F vergleichsweise in ihre Ruhelage verharren. Die diesbezügliche Situation bleibt so lange erhalten, bis bei der Ausführung nach Figur 5 ein kreisförmiges Profil der Wandung und bei der Ausführung nach Figur 6 ein kreisförmiges Profil des n die Wandung eingebetteten Armierungselementes 21 erreicht ist. Das ist bei Schwingungen einer Frequenz von weniger als 10 Hz der Fall und somit bei Schwingungen, die in akustischer Hinsicht bedeutungslos sind. Druckänderungen haben daher nicht so sehr eine noch weitergehende Aufblähung der Leitung 5 zur Folge als vielmehr die Hindurchpressung der aus dem Arbeitsraum 1 verdrängten Flüssigkeitsvolumina durch die Dämpfungsöffnung 3. Diese ist mit einer großen Dämpfungsöffnung der entsprechenden Schwingungen verbunden.

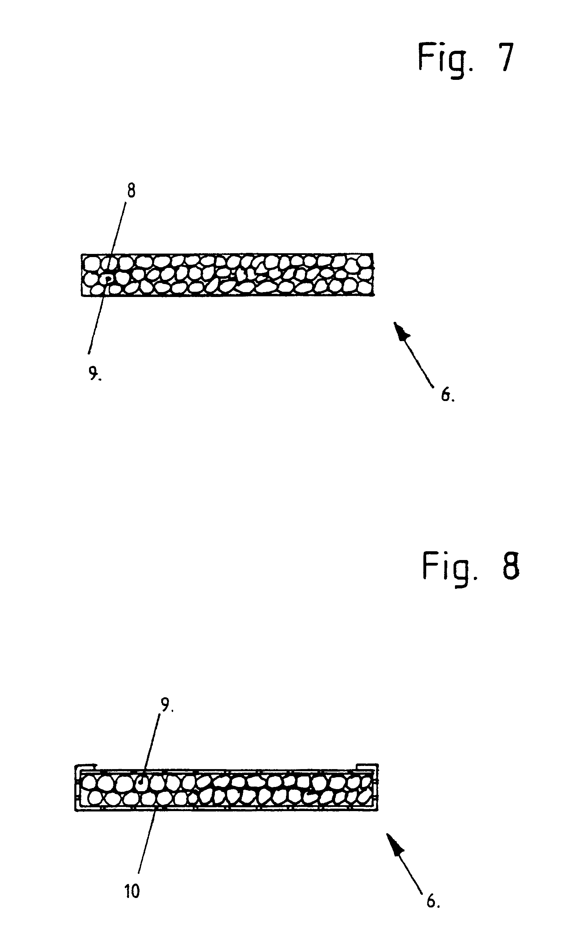

Die Figuren 7 und 8 zeigen zwei beispielhafte Ausführungen von Dämpfungskörpern 6. Diese sind jeweils von scheibenförmiger Gestalt, was die Befestigung in dem Gummilager erleichtert. Die Ausführung nach Figur 7 besteht aus zusammengesinterten, d.h. verklebten Partikeln 9 aus PTFE. Die gegenseitigen Verklebungszonen sind mit 8 bezeichnet.

Im Falle der Ausführung nach Figur 8 sind metallische Partikel 9 in ein Siebgehäuse 10 eingeschlossen und werden durch dasselbe unverrückbar miteinander verpreßt. Die Porenradien sind durch den Wegfall von Verklebungszonen vergleichsweise kleiner und auch in einer Großserienproduktion besonders gut reproduzierbar. Die erzielbare Dämpfungswirkung ist, bezogen auf die Baugröße, ganz besonders groß.

**Patentansprüche**

1. Gummilager mit einem flüssigkeitsgefüllten Arbeitsraum (1), bei dem erste Mittel zur Dämpfung tieffrequenter Schwingungen unterhalb von 20 Hz vorgesehen sind sowie zweite Mittel zur Dämpfung hochfrequenter Schwingungen oberhalb von 20 Hz, wobei die ersten Mittel durch eine den Arbeitsraum begrenzende, elastisch verformbare Tragfeder (2) mit einer Nachgiebigkeit der Tragfeder und eine Dämpfungsöffnung (3) gebildet sind, durch die bei Einleitung tieffrequenter Schwingungen Flüssigkeit unter Vernichtung von Energie verlagerbar ist, wobei die zweiten Mittel durch eine den Arbeitsraum (1) mit einem Pufferraum (4) verbindende Leitung (5) von trichterförmig in Richtung des Arbeitsraumes erweitertem Querschnitt gebildet sind, die gegenüber dem Pufferraum (4) durch einen Dämpfungskörper (6) mit dem Strömungswiderstand R abgeschlossen ist und die an der engsten Stelle (12) den Wellenwiderstand Zw $\sqrt{L'/C'}$ aufweist, wobei

$L' = \rho/A = $ Trägheitsbelag

$C' = (2A/E) \cdot ((1 + X^2)/(1 - X^2)) = $ Nachgiebigkeitsbelag

$\rho = $ Dichte der Flüssigkeit

$A = $ Leitungsquerschnitt

$E = $ Elastizitätsmodul der Leitung (5) und wobei

$X = $ Radienverhältnis der Wandung (13), wobei die Leitung (5) von im wesentlichen unveränderbarer Länge L ist, dadurch gekennzeichnet, daß die Leitung (5) eine Länge L aufweist, die wenigstens 0,2 mal so groß ist wie die größte Wellenlänge $\lambda = v/f = (1/\sqrt{L' \cdot C'})/f$, wobei

$v = $ Ausbreitungsgeschwindigkeit der Wellen und

$f = $ Frequenz, der sich bei Einleitung von Schwingungen oberhalb einer Frequenz von 20 Hz in der Leitung (5) ergebenden Druckschwankungen, daß die Leitung (5) innerhalb der Länge L an wenigstens einer Umfangsstelle der Wandung (13) elastisch verformbar ist und eine Nachgiebigkeit der Leitung (5) aufweist, daß die Nachgiebigkeit der Leitung (5) die Nachgiebigkeit der Tragfeder (2) derart ergänzt, daß sich in der Dämpfungsöffnung (3) bei Einleitung tieffrequenter Schwingungen die gewünschte Energievernichtung ergibt, daß der Strömungswiderstand R und der Wellenwiderstand Zw im wesentlichen übereinstimmen und daß die Leitung (5) einen dem Arbeitsraum (1) zugewandten Eintrittsquerschnitt (11) aufweist, der wenigstens 0,2 mal so groß ist wie der von der Tragfeder (2) bei Einleitung von Schwingungen verdrängte Querschnitt.

2. Gummilager nach Anspruch 1, dadurch gekennzeichnet, daß der Eintrittsquerschnitt (11) wenigstens 0,6 mal so groß ist wie der von der Tragfeder (2) bei Einleitung von Schwingungen verdrängte Querschnitt.

3. Gummilager nach Anspruch 1, dadurch gekennzeichnet, daß der Eintrittsquerschnitt (11) annähernd ebenso groß ist wie der von der Tragfeder (2) bei Einleitung von Schwingungen verdrängte Querschnitt.

4. Gummilager nach Anspruch 1 bis 3, dadurch gekennzeichnet, daß der die Leitung (5) abschließende Pufferraum (4) von einer flexiblen Wandung (7) begrenzt und hierdurch zur drucklosen Aufnahme zusätzlichen Flüssigkeitsvolumens geeignet ist.

5. Gummilager nach Anspruch 1 bis 4, dadurch gekennzeichnet, daß der zwischen der Leitung (5) und dem Pufferraum (4) angeordnete Dämpfungskörper (6) aus unverrückbar zusammengelegten Festkörpern (9) besteht.

6. Gummilager nach Anspruch 5, dadurch gekennzeichnet, daß die Festkörper (9) verklebt und/oder durch ein flüssigkeitsdurchlässiges Gehäuse (10) mechanisch verklammert sind.

7. Gummilager nach Anspruch 1 bis 6, dadurch gekennzeichnet, daß die Umfangsstelle der Wandung (13) über dem gesamten Umfang der Leitung (5) ausgedehnt ist.

8. Gummilager nach Anspruch 7, dadurch gekennzeichnet, daß die Leitung (5) innen- und außenseitig durch trichterförmig gestaltete Flächen (14, 15) begrenzt ist.

9. Gummilager nach Anspruch 8, dadurch gekennzeichnet, daß die trichterförmig gestalteten Flächen (14, 15) die Gestalt von Exponentialtrichtern haben.

10. Gummilager nach Anspruch 7 bis 9, dadurch gekennzeichnet, daß die Leitung (5) zumindest auf einem Teil ihrer Länge (L) von ovalem Querschnitt ist.

11. Gummilager nach Anspruch 1 bis 6, dadurch gekennzeichnet, daß die Leitung (5) eine Wandung (13) aufweist, die im Bereich der nachgiebigen Umfangsstelle membranartig gestaltet ist und eine in Richtung des Arbeitsraumes stetig vergrößerte Dicke hat.

12. Gummilager nach Anspruch 1 bis 11, dadurch gekennzeichnet, daß die Leitung (5) eine Wandung (13) aufweist, die in Längsrichtung zumindest an einer Stelle durch ein sich quer zur Längsrichtung der Leitung (5) erstreckendes Armierungselement (21) abgestützt ist.

## Claims

1. A rubber mount with a fluid-filled working space (1), in which first means for damping low-frequency vibrations below 20 Hz and second means for damping high-frequency vibrations above 20 Hz are provided, the first means being formed by an elastically deformable bearing spring (2) bounding the working space and having a compliance of the bearing spring and by a damping opening (3), through which fluid can be displaced with dissipation of energy when low-frequency vibrations are introduced, the second means being formed by a conduit (5) which connects the working space (1) to a buffer space (4), has a horn-shaped cross-section which widens in the direction of the working space, is closed off from the buffer space (4) by a damping body (6) with the flow resistance R and, at the narrowest point (12), has the characteristic impedance $Zw = \sqrt{L'/C'}$, where

$L' =$  $\rho/A =$ specific inertia
$C' =$  $(2A/E) \cdot ((1 + X^2)/(1 - X^2)) =$ specific compliance
$\rho =$  density of the fluid
$A =$  cross-section of the conduit
$E =$  modulus of elasticity of the conduit (5) and where
$X =$  ratio of the radii of the wall (13), the conduit (5) being of essentially invariable length L, characterised in that the conduit (5) has a length L which is at least 0.2 times as great as the greatest wave length $\lambda$ $= v/f = (1/ \sqrt{L' - C'})/f$, where
$V =$  propagation speed of the waves and
$f =$  frequency of the pressure fluctuations which ensue in the conduit (5) when vibrations above a frequency of 20 Hz are introduced, in that, within the length L, the conduit (5) is elastically deformable at at least one point on the circumference of the wall (13) and has a compliance of the conduit (5), in that the compliance of the conduit (5) supplements the compliance of the bearing spring (2) in such a way that the desired energy dissipation ensues in the damping opening (3) when low-frequency vibrations are introduced, in that the flow resistance R and the characteristic impedance Zw essentially correspond and in that the conduit (5) has an inlet cross-section (11) facing the working space (1) which is at least 0.2 times as large as the cross-section displaced by the bearing spring (2) when vibrations are introduced.

2. A rubber mount according to claim 1, characterised in that the inlet cross-section (11) is at least 0.6 times as large as the cross-section displaced by the bearing spring (2) when vibrations are introduced.

3. A rubber mount according to claim 1, characterised in that the inlet cross-section (11) is approximately the same size as the cross-section displaced by the bearing spring (2) when vibrations are introduced.

4. A rubber mount according to any of claims 1 to 3, characterised in that the buffer space (4) closing off the conduit (5) is bounded by a flexible wall (7) and, as a result, is suitable for the unpressurised accommodation of an additional volume of fluid.

5. A rubber mount according to any of claims 1 to 4, characterised in that the damping body (6) arranged between the conduit (5) and the buffer space (4) comprises solid bodies (9) placed immovably together.

6. A rubber mount according to claim 5, characterised in that the solid bodies (9) are adhesively bonded and/or clamped mechanically by a fluid-permeable housing (10).

7. A rubber mount according to any of claims 1 to 6, characterised in that the point on the circumference of the wall (13) is extended over the entire circumference of the conduit (5).

8. A rubber mount according to claim 7, characterised in that the conduit (5) is bounded on the inside and outside by surfaces (14, 15) of horn-shaped configuration (14, 15).

9. A rubber mount according to claim 8, characterised in that the surfaces (14, 15) of horn-shaped configuration have the form of exponential horns.

10. A rubber mount according to any of claims 7 to 9, characterised in that, over at least part of its length (L), the conduit (5) is of oval cross-section.

11. A rubber mount according to any of claims 1 to 6, characterised in that the conduit (5) has a wall (13) which, in the region of the compliance point on the circumference, is of diaphragm-like configuration and has a continuously increased thickness in the direction of the working space.

12. A rubber mount according to any of claims 1 to 11, characterised in that the conduit (5) has a wall (13) which, at at least one point in the longitudinal direction, is supported by a reinforcing element (21) extending transversely to the longitudinal direction of the conduit (5).

**Revendications**

1. Support en caoutchouc avec chambre de travail (1) remplie de liquide, comprenant des premiers moyens pour l'amortissement de vibrations basses fréquences en dessous de 20 Hz ainsi que des deuxièmes moyens pour l'amortissement de vibrations hautes fréquences au-delà de 20 Hz, lesdits premiers moyens étant formés par un ressort porteur (2) déformable élastiquement délimitant la chambre de travail, avec une élasticité du ressort porteur, et une ouverture d'amortissement (3) par laquelle, lors de l'introduction de vibrations basse fréquences, du liquide peut être déplacé en dégradant de l'énergie, lesdits deuxièmes moyens étant formés par une conduite (5) reliant la chambre de travail (1) avec une chambre tampon (4), la conduite (5) ayant une section qui s'évase en forme d'entonnoir en direction de la chambre de travail et qui se termine en face de la chambre tampon (4) par un corps d'amortissement (6) ayant une résistance à l'écoulement R et qui présente à l'endroit le plus étroit (12) l'impédance $Z_W = \sqrt{L'/C'}$, où

$L' =$    $\rho/A$ = densité linéique d'inertie

$C' =$    $(2A/E) \cdot ((1 + X^2)/(1 - X^2))$ = densité linéique d'élasticité

$\rho =$    masse volumique du liquide

$A =$    section de la conduite

$E =$    module d'élasticité de la conduite (5) et où

$X =$    rapport des rayons de la paroi (13) où la conduite est essentiellement à la longueur invariable L, caractérisé en ce que la conduite (5) a une longueur L qui est au moins égale à 0,2 fois la plus grande longueur $\lambda = V/f = (1/\sqrt{L' \cdot C'})/f$ où

$V =$    vitesse de propagation des ondes et

$f =$    fréquence des variations de pressions dans la conduite (5) lors de l'introduction de vibrations au delà d'une fréquence de 20 Hz que la conduite (5) est déformable élastiquement sur la longueur L à au moins un endroit circonférentiel de la paroi (13) représentant une élasticité de la conduite (5), que l'élasticité de la conduite (5) complète l'élasticité du ressort porteur (2) de façon à ce qu'à l'ouverture d'amortissement (3) ait lieu la dégradation d'énergie recherchée lors de l'introduction de vibrations basses fréquences, que la résistance à l'écoulement R et l'impédance $Z_W$ coïncident dans les grandes lignes et que la conduite (5) dispose d'une section d'entrée orientée vers la chambre de travail (1) qui est au moins égale à 0,2 fois la section déplacée par le ressort porteur (2) lors de l'introduction de vibrations.

2. Support en caoutchouc selon la revendication 1, caractérisé en ce que la section d'entrée (11) est égale à au moins 0,6 fois la section déplacée par le ressort porteur (2) lors de l'introduction de vibrations.

3. Support en caoutchouc selon la revendication 1, caractérisé en ce que la section d'entrée (11) est approximativement égale à la section déplacée par le ressort porteur (2) lors de l'introduction de vibrations.

4. Support en caoutchouc selon les revendications 1 à 3, caractérisé en ce que la chambre tampon (4) terminant la conduite (5) est limitée par une paroi flexible (7) et est par ce moyen apte à recevoir un volume de liquide supplémentaire sans variation de pression.

5. Support en caoutchouc selon les revendications 1 à 4, caractérisé en ce que le corps d'amortissement (6) disposé entre la conduite (5) et la chambre tampon (4) est formé de solides (9) agencés de façon à ne pas permettre de déplacements relatifs.

6. Support en caoutchouc selon la revendication 5, caractérisé en ce que les solides (9) sont collés ensemble et/ou serrés mécaniquement l'un contre l'autre par un boîtier (10) perméable au liquide.

7. Support en caoutchouc selon les revendications 1 à 6, caractérisé en ce que l'endroit circonférentiel de la paroi (13) s'étend sur tout le périmètre de la conduite (5).

8. Support en caoutchouc selon la revendication 7, caractérisé en ce que la conduite (5) est limitée intérieurement et extérieurement par des surfaces en forme d'entonnoir (14, 15).

9. Support en caoutchouc selon la revendication 8, caractérisé en ce que les surfaces en forme d'entonnoir (14, 15) ont la forme d'entonnoirs dont la génératrice est une courbe exponentielle.

10. Support en caoutchouc selon les revendications 7 à 9, caractérisé en ce que la conduite (5) a au moins sur une partie de sa longueur (L) une section ovale.

11. Support en caoutchouc selon les revendications 1 à 6, caractérisé en ce que la conduite (5) a une paroi (13) qui a la forme d'une membrane dans la zone de l'endroit circonférentiel élastique et une épaisseur qui croît progressivement en direction de la chambre de travail.

12. Support en caoutchouc selon les revendications 1 à 11, caractérisé en ce que la conduite (5) a une paroi (13) qui est soutenue en direction longitudinale à au moins un endroit par un élément d'armature (21) qui s'étend perpendiculairement à la direction longitudinale de la conduite (5).

# Fig. 1

Fig. 2

1

3

18

11

12

5

19

20

4

6

Fig. 2a

19

6

3

20

## Fig. 3

## Fig. 3a

Fig. 4

Fig. 5

Fig. 6

14

Fig. 7

8

9.

6.

Fig. 8

9.

10

6.